# EUROPÄISCHE PATENTSCHRIFT

(11) **EP 0 513 705 B1**
(45) Veröffentlichungstag und Bekanntmachung des Hinweises auf die Patenterteilung: **01.03.1995**
(21) Anmeldenummer: 92107872.1
(22) Anmeldetag: 08.05.1992
(51) Int. Cl.: F28D 7/02, F24D 17/00

(54) **Wärmetauscher für Abwasser führende Rohr- oder Schlauchleitungen**
Heat exchanger for waste water piping
Echangeur de chaleur pour canalisation d'eaux usées

(30) Priorität: 11.05.1991 DE 4115517; 31.01.1992 DE 4202791
(43) Veröffentlichungstag der Anmeldung: 19.11.1992
(73) Patentinhaber: FIRMA RUDOLF LINDER, 42719 Solingen (DE)
(72) Erfinder: Linder, Horst, W-5650 Solingen 19 (DE)
(74) Vertreter: Lippert, Hans-Joachim, Dipl.-Ing.

(56) Entgegenhaltungen:
- DE-A- 3 244 600
- DE-A- 3 545 423
- DE-C- 872 211
- GB-A- 2 165 932
- US-A- 4 372 372
- US-A- 4 502 529

## Beschreibung

Die Erfindung betrifft einen Wärmetauscher für Abwasser führende Rohr- oder Schlauchleitungen, mit einer Wendel zum Hindurchleiten von Brauchwasser, deren einzelne Windungen dicht aneinander anliegen, sowie beidseitig der Wendel angeordneten Anschlußstutzen zum Verbinden des Wärmetauschers mit den Rohrleitungen, wobei die Anschlußstutzen und die Wendel ein Rohrpaßstück bilden.

Es ist bekannt, daß Abflußleitungen, beispielsweise Rohr- oder Kanalleitungen, Haushaltsabwässer, Industrie-, Regen- oder Oberflächenwasser mit unterschiedlichen Temperaturen führen, die aber immer höher sind, als die Temperatur des zugeführten Kalt-Brauchwassers. Beispielsweise gehen beim Duschen oder beim Betrieb von Haushaltgeräten, wie Wasch- oder Spülmaschinen, erhebliche Wärmemengen ungenutzt verloren. Insofern führen diese Abflußleitungen zu Energieverlusten, wenn eine Wärmerückgewinnung aus diesen Leitungen nicht vorgesehen wird.

So ist ein Wärmetauscher für Abwasserleitungen bekannt, bei dem ein Abschnitt der Abwasserrohrleitung durch einen mit einem Wärmeträgerfluid gefüllten, wärmeisolierten und allseitig geschlossenen Behälter geführt wird. Dieser Abschnitt der Abwasserrohrleitung ist dabei im Behälter zu einer Wendel geformt, innerhalb deren wenigstens ein von einem wärmeaufnehmenden Fluid durchströmter Wärmeübertrager angeordnet ist (DE 32 44 600 C2)

Dieser Wärmetauscher erfordert einen erheblichen technischen Aufwand und ist damit in seiner Herstellung sehr kostspielig. Durch die zwangsläufig großen Abmessungen ist der Wärmetauscher nicht für den Einbau in Häusern geeignet, zumindest ist es nicht möglich, den Wärmetauscher unmittelbar in der Nähe von Abwasser produzierenden Geräten anzuordnen. Der erreichbare Wirkungsgrad steht in keinem Verhältnis zum Kostenaufwand. Darüberhinaus ist ein erheblicher Wartungs- bzw. Reparaturaufwand, insbesondere bei Verstopfungen innerhalb des Behälters, zu erwarten.

Aus der US-A-4502 529 ist ein Wärmerückgewinnungssystem bekannt geworden, welches in der Hauptsache aus einer wendelförmig angeordneten Rohrschlange besteht, die mit Anschlüssen zum Hindurchleiten von zu erwärmendem Wasser und mit Anschlußstutzen zum Hindurchleiten von Abwasser versehen ist. Die einzelnen Windungen der vorzugsweise aus Kupfer oder Aluminium bestehenden Rohrschlange sind durch eine Schweißnaht dicht miteinander verbunden. Die Anschlußstutzen sind seitlich an der Rohrschlange derart angeordnet, daß diese teilweise in die Rohrschlange hineingeschoben und an dieser durch Löten oder Schweißen befestigt sind. Der Innendurchmesser der Rohrschlange ist deshalb in diesem Bereich größer, als zwischen den Anschlußstutzen, wo die Rohrschlange den gleichen Innendurchmesser wie die Anschlußstutzen aufweist.

Dieser Wärmetauscher ist besonders schwierig herzustellen, da die Wendel unterschiedliche Durchmesser aufweisen muß. Das bedeutet, daß die Rohrschlange nicht in einem Arbeitsgang, sondern in mehreren Arbeitsgängen hergestellt werden muß, was zu einer Verteuerung des Wärmetauschers führt. Weiterhin befinden sich auf der Innenseite des Wärmetauschers zwischen der Rohrschlange und den Anschlußstutzen Zwischenräume, so daß sich dort Schmutzpartikel anlagern können, die zu einer Verschlechterung der Wärmeübertragung führen.

Der Erfindung liegt deshalb die Aufgabe zugrunde, einen besonders billig herzustellenden und universell einsetzbaren sowie problemlos zu montierenden Wärmetauscher für Abwasser führende Rohr- oder Schlauchleitungen zu schaffen, der einen guten Wirkungsgrad aufweist und der innerhalb von Wohnungen im Rahmen der normalen Wasserinstallation verwendet werden kann.

Der Wärmetauscher für Abwasser führende Rohr- oder Schlauchleitungen besteht aus einer Wendel zum Hindurchleiten von Brauchwasser, deren einzelne Windungen dicht aneinander anliegen, sowie beidseitig der Wendel angeordneten Anschlußstutzen zum Verbinden des Wärmetauschers mit den Rohrleitungen, wobei die Anschlußstutzen und die Wendel ein Rohrpaßstück bilden.

Die Erfindung ist dadurch gekennzeichnet, daß die Anschlußstutzen des Rohrpaßstückes an den Stirnseiten der Wendel befestigt sind und daß das Rohrpaßstück wenigstens auf seiner Innenseite, zumindest im Bereich der Wendel mit einer, eine Schutzschicht bildenden Beschichtung versehen ist.

Dieser erfindungsgemäße Wärmetauscher kann aufgrund seiner kompakten Gestaltung problemlos an Abwasser führende Rohroder Schlauchleitungen angeschlossen werden und ermöglicht ohne Energiezuführung Brauchwasser vorzuwärmen und damit Energieverlusten vorzubeugen. Die Schutzschicht verhindert ein anhaften von Partikeln aus dem Abwasser und gleichzeitig eine Korrosion der Wendel. Ein weiterer Vorteil besteht darin, daß der Wärmetauscher besonders billig herzustellen ist und keinerlei Wartung bedarf.

Der Wärmetauscher kann z.B. mittels der Anschlußstutzen in eine Hauswasser-Abflußleitung eingesetzt werden, wobei die Wendel einerseits mit dem Brauchwasser-Zufluß und andererseits mit einem Warmwasserbereiter zu verbinden ist. Ein besonderer Vorteil des Wärmetauschers ist darin zu sehen, daß dessen Abmessungen problemlos an den jeweiligen Einsatzort angepaßt werden können.

In Fortführung der Erfindung bestehen die Wendel und die Anschlußstutzen aus Kupfer, Edelstahl oder Kunststoff und sind miteinander durch eine Löt-, Schweiß- oder Klebverbindung verbunden. Damit kann der Wärmetauscher problemlos in Abwasser führende Rohrleitungen eingesetzt werden.

Die Schutzschicht besteht zweckmäßigerweise aus einer Kunststoffbeschichtung, die beispielsweise elektrolytisch oder durch extrudieren aufgetragen ist.

Um Wärmeverlusten vorzubeugen, ist eine weitere Ausgestaltung der Erfindung dadurch gekennzeichnet, daß das Rohrpaßstück auf seiner Außenseite, zumindest im Bereich der Wendel, mit einer Isolierschicht versehen ist. Die Isolierschicht kann aus dem gleichen Kunststoff hergestellt werden, wie die Schutzschicht, so daß beide Schichten gleichzeitig aufgebracht werden können.

Eine besondere Verwendung des erfindungsgemäßen Wärmetauschers für einen Syphon ergibt sich, wenn wenigstens ein Rohrpaßstück und ein gebogenes Zwischenstück miteinander verbunden sind. Dieser Syphon kann problemlos am Auslaß eines Waschbeckens, einer Badewanne oder einer Brausetasse angeschlossen werden.

Der erfindungsgemäße Wärmetauscher kann auch vorteilhaft in einem Abwassergehäuse verwendet werden, wenn zwei Rohrpaßstücke unter Zwischenschaltung eines s-förmig gebogenen Zwischenstückes miteinander verbunden und in dem Abwassergehäuse angeordnet werden, welches mit Anschlüssen für Abwasser und Brauchwasser versehen ist.

Durch diese Ausgestaltung der Erfindung ist es möglich, den Wärmetauscher an einer beliebigen Stelle, beispielsweise im Bad unterzubringen, wobei das Gehäuse ähnlich wie ein Warmwasserbereiter ausgeführt werden könnte.

Der erfindungsgemäße Wärmetauscher kann z.B. an eine Hauswasser-Abflußleitung angeschlossen werden, wobei die Wasserzuführung einerseits mit dem Brauchwasser-Zufluß und andererseits mit dem Warmwasserbereiter verbunden ist. Das Rohrpaßstück soll dabei an genormte Rohre mit im Handel erhältlichen Verbindungen angeschlossen werden.

Es ist auch möglich, bei dezentraler Wasserversorgung mehrere Wärmetauscher anzuschließen.

Besonders günstig ist die Verwendung von mehreren Wärmetauschern, die an einer Abflußsammelleitung, beispielsweise einer Waschanlage, angeschlossen sind und parallel oder in Reihe geschaltet mit einem zentralen Warmwasserbereiter verbunden sind.

Eine weitere vorteilhafte Verwendung des Wärmetauschers ist gegeben, wenn dieser in einem Abflußschlauch einer Wasch- oder Spülmaschine zwischengeschaltet wird, wobei dessen Wasserführung einerseits mit dem Wasseranschluß der Wasch- oder Spülmaschine und andererseits mit einer Kaltwasserzapfstelle verbunden ist.

Die Erfindung soll nachstehend an einem Ausführungsbeispiel näher erläutert werden. In dazugehörigen Zeichnungen zeigen
- Fig. 1: eine Schnittdarstellung des erfindungsgemäßen Wärmetauschers,
- Fig. 2: ein Anwendungsbeispiel des Wärmetauschers nach Figur 1 in einem Einfamilienhaus mit zentraler Wasserbereitung,
- Fig. 3: ein Anwendungsbeispiel des Wärmetauschers nach Figur 1 in einem Mehrfamilienhaus mit dezentraler Wasserbereitung,
- Fig. 4: ein Anwendungsbeispiel des Wärmetauschers nach Figur 1 in einer Waschraumanlage,
- Fig. 5: ein Anwendungsbeispiel des Wärmetauschers nach Figur 1 an einer Wasch- oder Spülmaschine,
- Fig. 6: ein Wärmetauscher in Form eines Syphons an einem Waschtisch, und
- Fig. 7: ein in einem Gehäuse angeordneter Wärmetauscher.

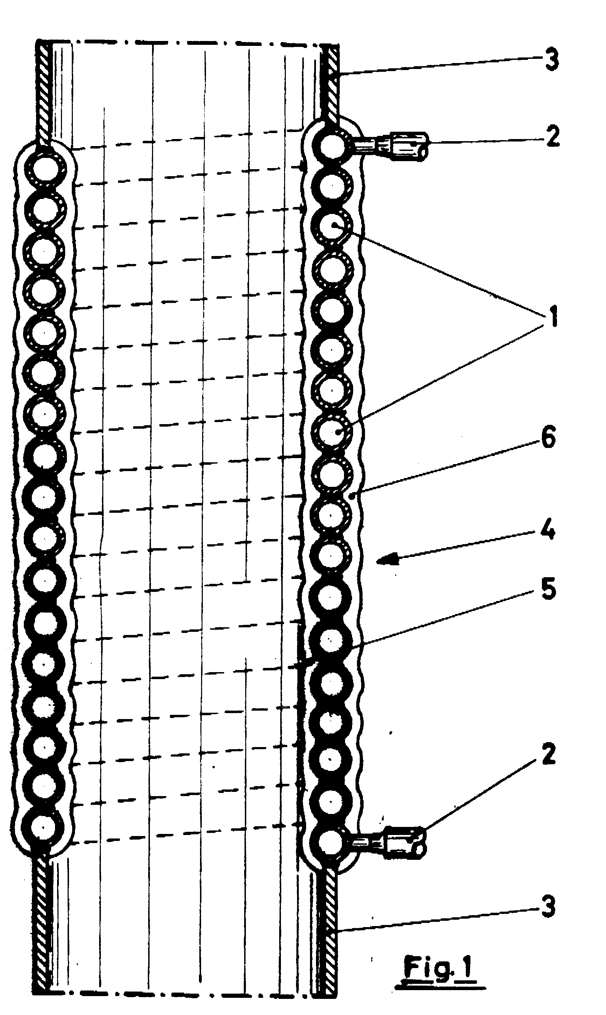

Entsprechend Figur 1 sind die Windungen einer Wendel 1, die aus einem Kupfer-, Edelstahl- oder Kunststoffrohr bestehen können, miteinander durch eine Löt-, Schweiß- oder Klebverbindung fest verbunden, so daß ein Rohrstück entsteht, dessen Wandung durch die Wendel 1 gebildet wird. Um eine Verbindung der Wendel 1 mit einem Kaltwasserkreislauf herstellen zu können, sind an den Enden der Wendel 1 Anschlüsse 2 vorgesehen. Weiterhin sind an den beiden Stirnseiten der Wendel 1 Anschlußstutzen 3 befestigt, wobei die Befestigung entsprechend dem verwendeten Material durch eine Löt-, Schweiß- oder Klebverbindung erfolgen kann.

Die somit hergestellte Einheit bildet ein Rohrpaßstück 4, welches problemlos in Abwasser führende Rohrleitungen eingesetzt werden kann.

Zum Schutz vor Schmutzablagerungen einerseits und zum Korrosionsschutz andererseits ist auf der Innenseite des Rohrpaßstückes 4, zumindest im Bereich der Wendel 1, eine Schutzschicht 5 aus einem Kunststoff aufgetragen. Das Aufbringen der Schutzschicht 5 kann beispielsweise durch elektrolytisches Auftragen oder Extrudieren erfolgen.

Weiterhin ist die Außenseite der Wendel 1 mit einer Isolierschicht 6 aus Kunststoff versehen, die auf die gleiche Weise aufgetragen werden kann, wie die Schutzschicht 5. Das Auftragen der Schutzschicht 5 und der Isolierschicht 6 kann gleichzeitig erfolgen, wenn beide Schichten aus dem gleichen Kunststoff bestehen.

Es ist selbstverständlich möglich, die Isolierschicht 6 auch aus anderen handelsüblichen Isoliermaterialien herzustellen.

Dieser erfindungsgemäße Wärmetauscher 7 kann besonders kostengünstig hergestellt werden, da er aus wenigen Einzelteilen zu fertigen ist. Des weiteren ist ein hoher Wirkungsgrad zu verzeichnen.

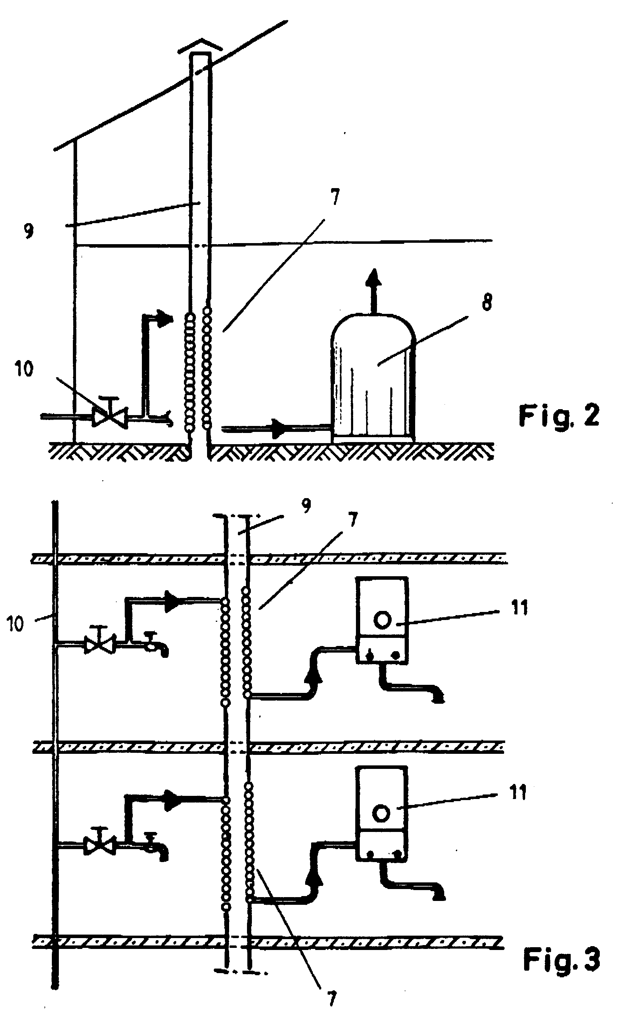

In Figur 2 ist ein Anwendungsfall des Wärmetauschers 7 in einem Einfamilienhaus mit einer zentralen Warmwasserversorgung mittels eines Warmwasserbereiters 8 dargestellt. Der Wärmetauscher 7 ist dabei in eine Abflußleitung 9 eingesetzt und andererseits an eine Kaltwasserleitung 10 angeschlossen. Der Warmwasseranschluß des Wärmetauschers 7 ist mit dem Warmwasserbereiter 8 verbunden. Dadurch, daß das erwärmte Abwasser innerhalb der senkrecht angeordneten Abflußleitung 9 hauptsächlich an deren Wandung entlangläuft, ist ein guter Wärmeübergang gewährleistet.

Gleichfalls ist es möglich, bei dezentraler Warmwasserversorgung in einem Mehrfamilienhaus mehrere Wärmetauscher 7 an einer Abflußleitung 9 vorzusehen, die über eine gemeinsame Kaltwasserleitung 10 gespeist werden und jeweils einen Durchlauferhitzer 11 mit vorgewärmtem Brauchwasser versorgen (Figur 3).

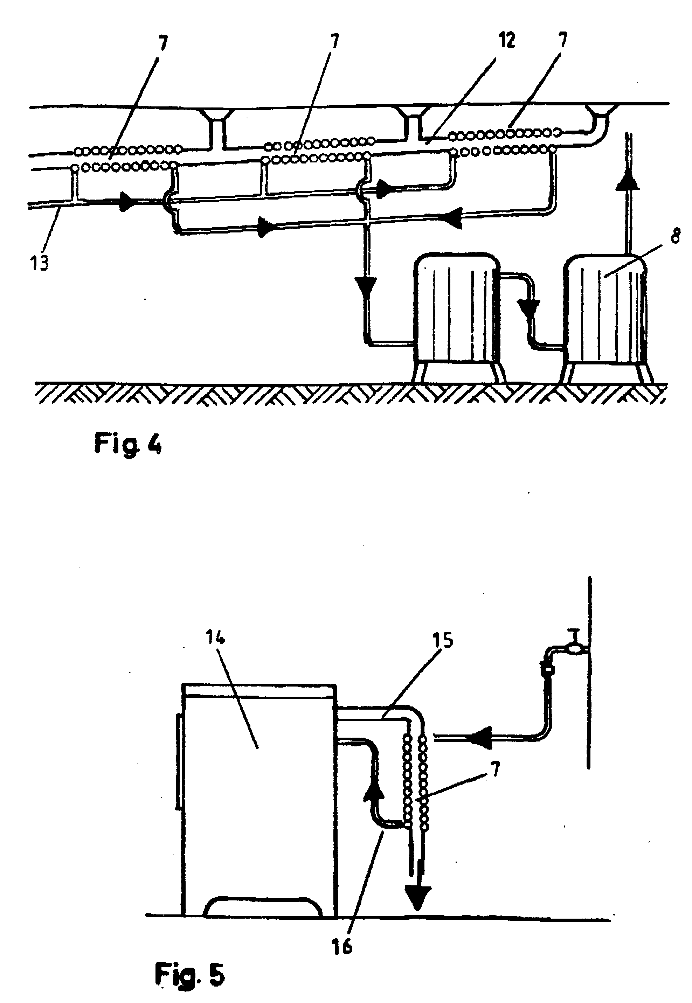

In Figur 4 ist eine weitere mögliche Anwendung des Wärmetauschers 7 für Waschraumanlagen in Industriebereichen dargestellt. Dabei sind in die Abwassersammelleitung 12 eines Waschraumes mehrere Wärmetauscher 7 eingesetzt, die parallel geschaltet mit einer gemeinsamen Kaltwasserzuführung 13 verbunden sind. Das durch die Wärmetauscher 7 erwärmte Brauchwasser wird einem zentralen Warmwasserbereiter 8 zugeführt, der seinerseits beispielsweise den Waschraum mit Warmwasser versorgt.

Ein besonderer Anwendungsfall ist im Zusammenhang mit Wasch- oder Spülmaschinen 14 (Figur 5) gegeben. Hierbei ist der Wärmetauscher 7 in den Ablaufschlauch 15 eingebunden. Damit kann die Kaltwasserzuführung zur Wasch- oder Spülmaschine über deren Wasseranschluß 16 und den Wärmetauscher 7 erfolgen. Dadurch kann bereits vorgewärmtes Wasser zugeführt werden. Der Wärmetauscher 7 kann auch direkt in die Wasch- oder Spülmaschine 14 integriert werden.

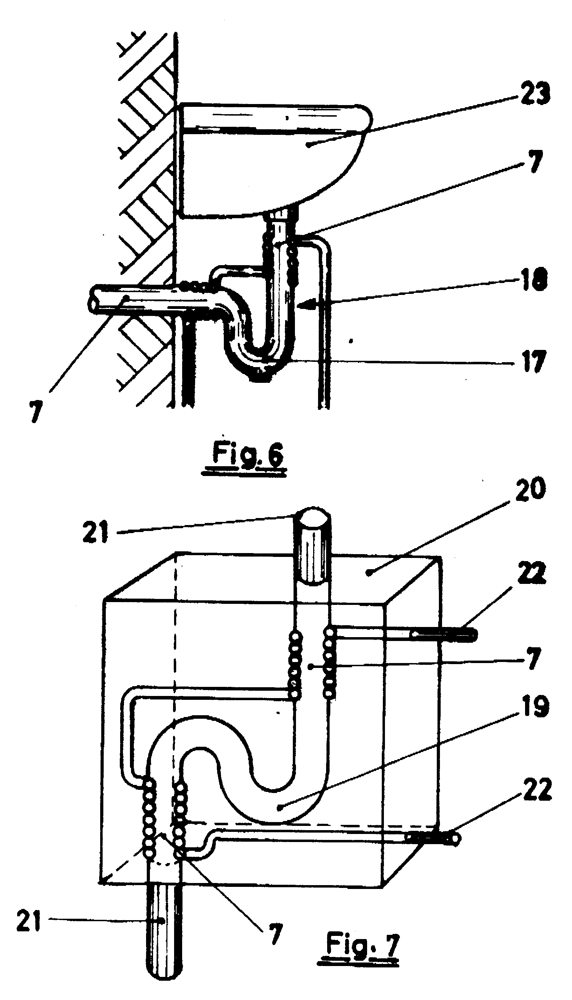

Eine besonders effektive Variante des Wärmetauschers 7 besteht darin, daß zwei Rohrpaßstücke 4 mit einem gebogenen Zwischenstück 17 miteinander zu einem Syphon 18 verbunden werden. Dieser Syphon 18 kann direkt an den Ablauf eines Waschbeckens 23 angeschlossen werden (Figur 6). Der Syphon 18 kann selbstverständlich auch mit dem Auslauf einer Badewanne oder einer Duschtasse verbunden werden.

Eine besondere Anordnung ist in Figur 7 dargestellt. Hierbei sind zwei Rohrpaßstücke 4 bzw. Wärmetauscher 7 über ein S-förmig gebogenes Zwischenstück 19 miteinander verbunden und in einem Gehäuse 20 angeordnet. Das Gehäuse selbst ist mit Anschlüssen 21 für Abwasser und Anschlüssen 22 für den Kaltwasserzu- bzw. -ablauf versehen, die ihrerseits mit den Anschlüssen 2 der Wendel 1 verbunden sind. Zusätzlich kann das Gehäuse auf seiner Innen- oder Außenseite mit einer Wärmeisolierschicht versehen werden. Das Gehäuse 20 kann beispielsweise die Form eines Warmwasserbereiters aufweisen und somit unauffällig an beliebiger Stelle angeordnet werden.

### Bezugszeichenliste

- 1: Wendel
- 2: Anschluß
- 3: Anschlußstutzen
- 4: Rohrpaßstück
- 5: Schutzschicht
- 6: Isolierschicht
- 7: Wärmetauscher
- 8: Warmwasserbereiter
- 9: Abflußleitung
- 10: Kaltwasserleitung
- 11: Durchlauferhitzer
- 12: Abwassersammelleitung
- 13: Kaltwasserzuführung
- 14: Wasch- oder Spülmaschine
- 15: Ablaßschlauch
- 16: Wasseranschluß
- 17: Zwischenstück
- 18: Syphon
- 19: Zwischenstück
- 20: Gehäuse
- 21: Anschluß
- 22: Anschluß
- 23: Waschbecken

## Patentansprüche

1. Wärmetauscher für Abwasser führende Rohr- oder Schlauchleitungen, mit einer Wendel (1) zum Hindurchleiten von Brauchwasser, deren einzelne Windungen dicht aneinander anliegen, sowie beidseitig der Wendel (1) angeordneten Anschlußstutzen (3) zum Verbinden des Wärmetauschers (7) mit den Rohrleitungen, wobei die Anschlußstutzen (3) und die Wendel (1) ein Rohrpaßstück (4) bilden, **dadurch gekennzeichnet**, daß die Anschlußstutzen (3) des Rohrpaßstückes (4) an den Stirnseiten der Wendel (1) befestigt sind und daß das Rohrpaßstück (4) wenigstens auf seiner Innenseite, zumindest im Bereich der Wendel (1) mit einer, eine Schutzschicht (5) bildenden Beschichtung versehen ist.

2. Wärmetauscher nach Anspruch 1, **dadurch gekennzeichnet**, daß die Wendel (1) und die Anschlußstutzen (3) aus Kupfer, Edelstahl oder Kunststoff bestehen und miteinander durch eine Löt-, Schweiß- oder Klebverbindung verbunden sind.

3. Wärmetauscher nach Anspruch 1 und 2, **dadurch gekennzeichnet**, daß die Schutzschicht (5) aus einer Kunststoffbeschichtung besteht.

4. Wärmetauscher nach Anspruch 3, **dadurch gekennzeichnet**, daß die Kunststoffbeschichtung elektrolytisch oder durch Extrudieren aufgetragen ist.

5. Wärmetauscher nach den Ansprüchen 1 bis 4, **dadurch gekennzeichnet**, daß das Rohrpaßstück (4) auf seiner Außenseite, zumindest im Bereich der Wendel (1) mit einer Isolierschicht (6) versehen ist.

6. Wärmetauscher nach Anspruch 5, **dadurch gekennzeichnet**, daß die Schutzschicht (5) und die Isolierschicht (6) aus dem gleichen Kunststoff bestehen.

7. Verwendung eines Wärmetauschers nach den Ansprüchen 1 bis 6 für einen Syphon (18), bei dem wenigstens ein Rohrpaßstück (4) und ein gebogenes Zwischenstück (17) miteinander verbunden sind.

8. Verwendung eines Wärmetauschers nach Anspruch 7 für einen Syphon, bei dem der Syphon (18) am Auslaß eines Waschbeckens, einer Badewanne oder einer Brausetasse angeschlossen ist.

9. Verwendung eines Wärmetauschers nach den Ansprüchen 1 bis 6 in einem Abwassergehäuse (20), bei dem zwei Rohrpaßstücke (4) unter Zwischenschaltung eines s-förmig gebogenen Zwischenstückes (19) miteinander verbunden und in dem Abwassergehäuse (20) angeordnet sind, welches mit Anschlüssen (21, 22) für Abwasser und Brauchwasser versehen ist.

10. Verwendung eines Wärmetauschers nach den Ansprüchen 1 bis 6, **dadurch gekennzeichnet**, daß der Wärmetauscher (7) an eine Abflußleitung (9) angeschlossen ist, wobei die Anschlüsse (2) einerseits mit dem Brauchwasserzufluß und andererseits mit einem Warmwasserbereiter (8) verbunden sind.

11. Verwendung eines Wärmetauschers nach den Ansprüchen 1 bis 6, **dadurch gekennzeichnet**, daß mehrere Wärmetauscher (7) an eine Abflußleitung (9) angeschlossen sind, die jeweils mit einem Brauchwasser-Zufluß und einem Durchlauferhitzer (11) verbunden sind.

12. Verwendung eines Wärmetauschers nach den Ansprüchen 1 bis 6, **dadurch gekennzeichnet**, daß mehrere Wärmetauscher (7) an eine Abwassersammelleitung (12) angeschlossen sind, deren Wasserzu- und -abführung parallel oder in Reihe geschaltet ist, wobei diese mit einer Kaltwasserzuführung (13) und einem zentralen Warmwasserbereiter (8) verbunden ist.

13. Verwendung eines Wärmetauschers nach den Ansprüchen 1 bis 6, **dadurch gekennzeichnet**, daß der Wärmetauscher (7) in einem Ablaufschlauch (15) einer Wasch- oder Spülmaschine (14) zwischengeschaltet ist, wobei dessen Wasserzu- bzw. -abführung einerseits mit dem Wasseranschluß (16) der Wasch- oder Spülmaschine (14) und andererseits mit einer Kaltwasserzapfstelle verbunden ist.

## Claims

1. Heat exchanger for pipes or hoses conducting waste water, with a spiral (1) for conducting service water, whose individual windings are in close contact with one another, and connecting pieces (3) located at each end of the spiral (1) for connecting the heat exchanger (7) to the pipes, where the connecting pieces (3) and the spiral (1) form a pipe sleeve (4), **characterised in that** the connecting pieces (3) of the pipe sleeve (4) are mounted on the end faces of the spiral (1), and the pipe sleeve (4) has a coating, at least on its inner surface and at least in the region of the spiral (1), which forms a protective layer (5).

2. Heat exchanger as per Claim 1, **characterised in that** the spiral (1) and the connecting pieces (3) are made of copper, special steel or plastic, and are connected to one another by a soldered, welded or bonded joint.

3. Heat exchanger as per Claims 1 and 2, **characterised in that** the protective layer (5) consists of a plastic coating.

4. Heat exchanger as per Claim 3, **characterised in that** the plastic coating is applied electrolytically or by extrusion.

5. Heat exchanger as per Claims 1 to 4, **characterised in that** the outside of the pipe sleeve (4) has an insulating layer (6), at least in the region of the spiral (1).

6. Heat exchanger as per Claim 5, **characterised in that** the protective layer (5) and the insulating layer (6) are made of the same plastic.

7. Use of a heat exchanger as per Claims 1 to 6 for a siphon (18), in which at least one pipe sleeve (4) and one curved intermediate section (17) are connected to one another.

8. Use of a heat exchanger as per Claim 7 for a siphon, where the siphon (18) is connected to the outlet of a wash basin, a bath tub or a shower basin.

9. Use of a heat exchanger as per Claims 1 to 6 in a waste water housing (20), in which two pipe sleeves (4) are connected to one another via an s-shaped intermediate section (19) and mounted in the waste water housing (20), which is equipped with connections (21, 22) for waste water and service water.

10. Use of a heat exchanger as per Claims 1 to 6, **characterised in that** the heat exchanger (7) is connected to a drain pipe (9), where the connections (2) are connected to the service water inlet on one side, and to a water heater (8) on the other side.

11. Use of a heat exchanger as per Claims 1 to 6, **characterised in that** several heat exchangers (7) are connected to a drain pipe (9), which are each connected to a service water inlet and a flow heater (11).

12. Use of a heat exchanger as per Claims 1 to 6, **characterised in that** several heat exchangers (7) are connected to a waste water collection pipe (12), whose water inlet and outlet are connected in parallel or in series to a cold water inlet (13) and a central water heater (8).

13. Use of a heat exchanger as per Claims 1 to 6, **characterised in that** the heat exchanger (7) is connected in a discharge hose (15) of a washing machine or dishwasher (14), where its water inlet and outlet are connected to the water supply (16) of the washing machine or dishwasher (14) on one side, and to a cold water tap on the other side.

## Revendications

1. Echangeur de chaleur pour conduits de tubes ou de tuyaux transportant des eaux résiduelles, lequel échangeur de chaleur présente une hélice (1) destinée au passage d'eau industrielle et dont les spires respectives sont en contact serré les unes avec les autres, lequel échangeur de chaleur présente de plus des ajutoirs (3) disposés des deux côtés de l'hélice (1) et permettant de raccorder l'échangeur de chaleur (7) aux conduits, les ajutoirs (3) et l'hélice (1) formant alors un tube d'ajustage (4), échangeur de chaleur caractérisé en ce que les ajutoirs (3) du tube d'ajustage (4) sont fixés aux fronts de l'hélice (1) et que le tube d'ajustage (4) est pourvu, au moins à sa surface intérieure, et au moins dans la zone de l'hélice (1), d'un revêtement formant une couche de protection (5).

2. Echangeur de chaleur suivant revendication 1, caractérisé en ce que l'hélice (1) et les ajutoirs (3) sont en cuivre, en acier fin ou en matière plastique et qu'ils sont joints par brasage, soudage ou collage.

3. Echangeur de chaleur suivant revendications 1 et 2, caractérisé en ce que la couche de protection (5) consiste en un revêtement de matière plastique.

4. Echangeur de chaleur suivant revendication 3, caractérisé en ce que le revêtement de matière plastique est appliqué par électrolyse ou par extrusion.

5. Echangeur de chaleur suivant revendications 1 à 4, caractérisé en ce que le tube d'ajustage (4) est pourvu, à sa surface extérieure, au moins dans la zone de l'hélice (1), d'une couche isolante (6).

6. Echangeur de chaleure suivant revendication 5, caractérisé en ce que la couche de protection (5) et la couche isolante (6) sont en matière plastique identique.

7. Utilisation d'un échangeur de chaleur suivant revendications 1 à 6 pour un siphon (18) où au moins un tube d'ajustage (4) et une pièce intermédiaire coudée (17) sont raccordés l'un à l'autre.

8. Utilisation d'un échangeur de chaleur suivant revendication 7 pour un siphon où le siphon (18) est raccordé à la sortie d'un lavabo, d'une baignoire ou d'une cuvette de douche.

9. Utilisation d'un échangeur de chaleur suivant revendications 1 à 6 dans un boîtier à eau résiduelle (20) où deux tubes d'ajustage (4) sont raccordés l'un à l'autre par intercalage d'une pièce intermédiaire (19) cintrée en S et disposés à l'intérieur du boîtier à eau résiduelle (20) qui est pourvu de raccords (21, 22) pour eau résiduelle et eau industrielle.

10. Utilisation d'un échangeur de chaleur suivant revendications 1 à 6, caractérisée en ce que l'échangeur de chaleur (7) est raccordé à un conduit d'évacuation (9) où les raccords (2) sont reliés d'un côté à l'arrivée d'eau industrielle et de l'autre côté à un chauffe-eau (8).

11. Utilisation d'un échangeur de chaleur suivant revendications 1 à 6, caractérisée en ce que plusieurs échangeurs de chaleur (7) sont raccordés à un conduit d'évacuation (9) et reliés à une arrivée d'eau industrielle et à un distributeur d'eau chaude (11) respectivement.

12. Utilisation d'un échangeur de chaleur suivant revendications 1 à 6, caractérisée en ce que plusieurs échangeurs de chaleur (7) sont raccordés à un conduit collecteur d'eau résiduelle (12) dont l'arrivée et l'évacuation d'eau est montée en parallèle ou en série et où celle-ci est reliée à une amenée d'eau froide (13) et à un chauffe-eau central (8).

13. Utilisation d'un échangeur de chaleur suivant revendications 1 à 6, caractérisée en ce que l'échangeur de chaleur (7) est intercalé dans un tuyau d'évacuation (15) d'une machine à laver le linge ou la vaisselle (14) où l'amenée ou l'évacuation d'eau du tuyau d'évacuation est relié d'un côté à au raccord à eau (16) de la machine à laver le linge ou la vaisselle (14) et de l'autre côté à une prise d'eau froide.
